# EUROPEAN PATENT SPECIFICATION

(11) **EP 3 722 177 B1**
(45) Date of publication and mention of the grant of the patent: **02.08.2023**
(21) Application number: 17933929.6
(22) Date of filing: 26.12.2017
(51) Int. Cl.: B60L 50/13, B60L 50/53, B60L 15/38, B60L 1/00, B60L 7/14, B61C 5/00, B61C 3/00, B60L 50/40, B60K 6/28, B60L 7/16, B60W 20/14, H02J 7/34, B60L 3/00, B60L 50/15, B61C 9/24

(54) **HYBRID POWER SUPPLY SYSTEM AND POWER SUPPLY METHOD FOR DIESEL MULTIPLE UNIT**
HYBRIDES STROMVERSORGUNGSSYSTEM UND STROMVERSORGUNGSVERFAHREN FÜR DIESELMEHRFACHEINHEIT
SYSTÈME D'ALIMENTATION ÉLECTRIQUE HYBRIDE ET PROCÉDÉ D'ALIMENTATION ÉLECTRIQUE POUR RAME AUTOMOTRICE DIESEL

(30) Priority: 08.12.2017 CN 201711292990
(43) Date of publication of application: 14.10.2020
(73) Proprietor: CRRC Zhuzhou Locomotive Co., Ltd., Zhuzhou, Hunan 412001 (CN)
(72) Inventor: YANG, Ying, Zhuzhou, Hunan 412001 (CN); ZHOU, Ande, Zhuzhou, Hunan 412001 (CN); LI, Yunlong, Zhuzhou, Hunan 412001 (CN); FAN, Libing, Zhuzhou, Hunan 412001 (CN); LI, Tingfang, Zhuzhou, Hunan 412001 (CN); QI, Biao, Zhuzhou, Hunan 412001 (CN)
(74) Representative: Ran, Handong
(86) International application number: PCT/CN2017/118477
(87) International publication number: WO 2019/109413

(56) References cited:
- EP-A2- 0 921 024
- CN-A- 103 496 327
- CN-A- 105 857 320
- CN-A- 106 114 531
- DE-A1- 10 204 215
- FR-B1- 2 970 455
- US-A1- 2006 266 044
- US-A1- 2007 158 118
- US-A1- 2010 087 978
- US-A1- 2017 253 127

## Description

### FIELD OF THE INVENTION

The present invention relates to an internal power supply system of diesel multiple unit, in particular to a hybrid power supply system of a diesel multiple unit and power supply method thereof.

### BACKGROUND OF THE INVENTION

After years of development, the existing diesel multiple units have made great contributions to the development of human civilization and created direct or indirect economic benefits that are difficult to calculate. However, with the rapid development of rail transit technology in recent years, people increasingly recognize the harm of the existing diesel multiple units to the human environment. The deterioration of air quality caused by the emissions from operation of power systems of the existing diesel multiple units, the gradual lack of oil resources, the urgency of environmental protection, and the pressure of shortage of oil reserves are forcing people to consider the problems of the power systems of the diesel multiple units and the solutions of optimal demands. At the early 20th century, the United States General Electric Company, Canadian Railpower Hybrid Technologies Corporation and Japan Toshiba Corporation successively developed diesel multiple units powered by diesel engines and batteries. However, the hybrid diesel multiple units have not been widely used in the fields of rail transits at home and abroad due to their high costs and high maintenance expenses. US2006/266044A1 discloses a circuit for boosting the voltage output of an alternator utilizes the armature coils of the alternator as part of the boost circuit. The circuit and methods utilizing this circuit can enable refined control strategies for operating a plurality of engine systems during propulsion, idling and braking and is applicable to large systems such as trucks, ships, cranes and locomotives utilizing diesel engines, gas turbine engines, other types of internal combustion engines, fuel cells or combinations of these that require substantial power and low emissions utilizing multiple power plant combinations.

### SUMMARY OF THE INVENTION

The technical problem to be solved by the present invention is to provide a hybrid power supply system of diesel multiple unit and power supply method thereof to improve the power performance of the train and improve the transportation capability of the train.

In order to solve the above technical problems, the technical solution adopted by the present invention is: a hybrid power supply system of a diesel multiple unit, including:
an energy management module, configured to receive respective current voltage, current, actual available power, and current output power sent by an internal electric power pack, a rectifier, a supercapacitor, and an inverter for energy management;
the internal electric power pack, configured to send its own working parameters to the energy management module, and at the same time transmit energy and its own capability parameters to the rectifier;
the rectifier, configured to send its own working parameters to the energy management module, and at the same time transmit energy and its own capability parameters to the inverter;
the supercapacitor, configured to send its own working parameters to the energy management module, and at the same time transmit energy and its own capability parameters to the inverter; and
the inverter, configured to send its own working parameters to the energy management module, and at the same time supply the output electricity of the internal electric power pack and the supercapacitor to a traction motor to monitor the working state of the traction motor;
when the train is running, the energy management module sends a level signal of a master controller of the train to the inverter, and the inverter, according to the received level signal of the master controller and the dynamic performance of the hybrid power supply system, sets an envelope curve of train speed vs. traction force and an envelope curve of train speed vs. regenerative braking force to control the traction motor to output the corresponding torque; at the same time, the inverter, according to the voltage and current values acquired at the input end, calculates and sends a current actual demanded power to the energy management module, the energy management module, according to the current available power of the supercapacitor, calculates a required output power and sends a command of the required output power to the rectifier, and the rectifier, according to the command of the energy management module, controls the internal electric power pack to output corresponding power.

The hybrid power supply system includes two power supplies: the internal electric power pack and the supercapacitor, so the power supplied is sufficient, the start acceleration of the train is high, and the dynamic performance of the train is greatly improved.

When the train is in a traction mode, the internal electric power pack and the supercapacitor provide power in parallel to the traction motor and the on-board load; when the train is braked, the internal electric power pack runs at idle speed, the rectifier is standby, and the supercapacitor quickly recovers the regenerative braking energy of the traction motor; when the train is in an inert mode or an static mode, the internal electric power pack runs at idle speed to maintain the current running speed of the train while charging the supercapacitor; when the internal electric power pack fails and is isolated, the supercapacitor supplies power to the train load to maintain the power supply for a period of time; and when the supercapacitor fails and is isolated, the internal electric power pack supplies power to the train load to maintain the low-speed operation of the train.

In the present invention, the power of the internal electric power pack is 360 to 390 kW, and the power of the supercapacitor is 300 to 450 kW. The price and weight of a set of internal electric power pack are about 1.5 times those of the supercapacitor of the same power, so the hybrid power supply system of the present invention has the characteristics of lightweight and low cost.

Correspondingly, the present invention also provides a hybrid power supply method for diesel multiple unit, including that:
when the train is in a traction mode, the energy management module judges whether the terminal voltage of the supercapacitor is greater than a first set voltage value of the supercapacitor; if the terminal voltage of the supercapacitor is greater than the first set voltage value (set to DC750V in the present invention), the energy management module controls the rectifier to be turned on, and the internal electric power pack and the supercapacitor supply power to the inverter together; if the terminal voltage of the supercapacitor is smaller than the first set voltage value, the energy management module controls the rectifier to be turned on, and the internal electric power pack charges the supercapacitor until the terminal voltage of the supercapacitor reaches the first set voltage value;
when the train is braked, the energy management module controls the internal electric power pack to run at idle speed and controls the rectifier to stand by, and at the same time, judges whether the current terminal voltage sent by the supercapacitor is greater than a second set voltage value of the supercapacitor; when the terminal voltage of the supercapacitor is greater than the second set voltage value, the energy management module controls the supercapacitor to be isolated, and the regenerative braking electricity is consumed by on-board devices and braking resistors; when the terminal voltage of the supercapacitor is smaller than the second set voltage value, the energy management module controls the supercapacitor to operate, and the regenerative braking electricity is absorbed by the supercapacitor and the on-board devices;
when the train is in an inert mode or an static mode, the energy management module controls the internal electric power pack to run at idle speed and controls the rectifier to operate, and at the same time, judges whether the current terminal voltage sent by the supercapacitor is greater than a third set voltage value of the supercapacitor; when the terminal voltage of the supercapacitor is greater than the third set voltage value, the energy management module controls the supercapacitor to be isolated; when the terminal voltage of the supercapacitor is smaller than the third set voltage value, the internal electric power pack charges the supercapacitor;
when the internal electric power pack fails, the energy management module controls the internal electric power pack and the rectifier to stop, and at the same time, judges whether the current terminal voltage sent by the supercapacitor is greater than a fourth set voltage value of the supercapacitor; when the terminal voltage of the supercapacitor is greater than the fourth set voltage value, the supercapacitor supplies power to the train load to maintain the power supply for a period of time; when the terminal voltage of the supercapacitor is smaller than the fourth set voltage value, the supercapacitor is first charged by an external power supply, and then the supercapacitor supplies power to the train load; and
when the supercapacitor fails, the energy management module controls the supercapacitor to be isolated, and controls the internal electric power pack to supply power to train traction loads and auxiliary loads.

Compared with the prior art, the present invention has the beneficial effects that the hybrid power supply system of the present invention includes two power supplies, so the power supplied is sufficient, the start acceleration of the train is high, and the dynamic performance of the train is greatly improved; because the supercapacitor participates in power supply, the output power of the internal electric power pack is greatly reduced when the train is running, which reduces the emission of pollution gas of the train, and the supercapacitor also has fast charge and discharge functions to achieve rapid recovery of train braking energy; and the present invention is simple in structure and reliable in control, and can greatly improve the dynamic performance of the train and improve the transportation capability of the train.

### BRIEF DESCRIPTION OF THE DRAWINGS

Fig. 1 is a circuit structure diagram of a hybrid power supply system according to the present invention;
Fig. 2 is a network connection diagram of the hybrid power supply system according to the present invention;
Fig. 3 is a configuration diagram of an internal electric power pack;
Fig. 4 is an internal configuration diagram of a rectifier;
Fig. 5 is an internal configuration diagram of a supercapacitor.

### DETAILED DESCRIPTION OF EMBODIMENTS

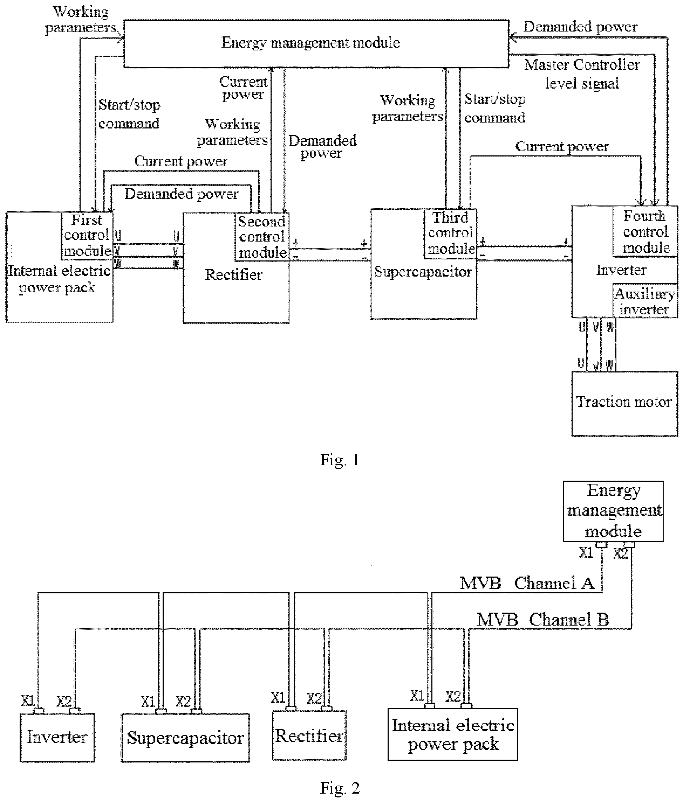

As shown in Fig. 1 and Fig. 2, a hybrid power supply system of the present invention includes:
An energy management module is configured to receive working states, current voltage, current, actual available power, and current output power sent by an internal electric power pack, a rectifier, a supercapacitor, and an inverter submodule themselves, and then perform calculation and energy management, thus achieving the advantages of fast response speed, strong dynamic performance and high braking energy recovery of the hybrid power supply system;

The internal electric power pack is connected to the energy management module through a multifunction vehicle bus (MVB) to send its own state and working parameters to the energy management module by using an MVB network, and is also connected to the rectifier through a power cable and a control cable to transfer energy from the internal electric power pack to the rectifier and send its own capability parameters to the rectifier;

The rectifier is connected to the energy management module through an MVB to send its own state and working parameters to the energy management module by using the MVB network, and is also connected to the inverter through a power cable and a control cable to transfer the energy of the power pack from the rectifier to the inverter and send its own capability parameters to the inverter;

The supercapacitor is connected to the energy management module through an MVB to send its own state and working parameters to the energy management module by using the MVB network, and is also connected to the inverter through a power cable to transfer energy from the supercapacitor to the inverter and send its own capability parameters to the inverter;

The inverter is connected to the energy management module through an MVB to send its own state and working parameters to the energy management module by using the MVB network, and is also connected to a traction motor through a power cable and a control cable to supply the output electricity of the internal electric power pack and the supercapacitor to the traction motor, and to monitor the working state of the traction motor;

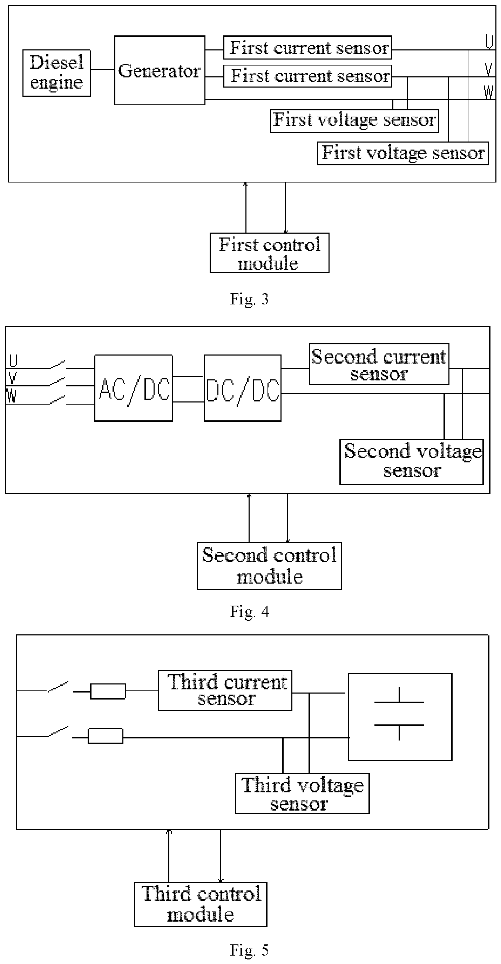

The internal electric power pack and the supercapacitor are connected in parallel in a main circuit to achieve hybrid power supply and increase train output power at wheel rim.
The internal electric power pack is equipped with a control machine case, and its output end is equipped with a first voltage sensor and a first current sensor, wherein the control machine case monitors the state of the internal electric power pack and controls the internal electric power pack to output corresponding power according to the command of the rectifier; the first voltage sensor is configured to monitor the real-time output voltage of the internal electric power pack; the first current sensor is configured to monitor the real-time output current of the internal electric power pack; and the circuit schematic diagram is shown in Fig. 3.

The rectifier is internally equipped with a second control module, its input end is equipped with a contactor, and its output end is equipped with a second voltage sensor and a second current sensor. The second control module monitors the state of the rectifier and controls the rectifier to output corresponding power according to the command of the energy management module; the contactor is configured to contact or isolate the rectifier; the second voltage sensor is configured to monitor the real-time output voltage of the rectifier; the second current sensor is configured to monitor the real-time output current of the rectifier; and the circuit schematic diagram is shown in Fig. 4.

The supercapacitor is internally equipped with a third control module, and its output end is equipped with a third voltage sensor and a third current sensor, a fuse and a contactor. The third control module monitors the state of the supercapacitor; the third voltage sensor is configured to monitor the real-time output voltage of the rectifier; the third current sensor is configured to monitor the real-time output current of the rectifier; the fuse is configured to perform over-current protection; the contactor is configured to contact or isolate the supercapacitor; and the circuit schematic diagram is shown in Fig. 5.

Further, the supercapacitor also has fast charge and discharge functions to achieve rapid recovery of train braking energy.

The inverter includes a traction inverter and an auxiliary inverter and is internally equipped with a fourth control module, its input end is equipped with voltage and current sensors and a contactor, and its output end is equipped with voltage and current sensors. The contactor is configured to contact or isolate the inverter; the fourth control module monitors the state of the inverter and controls the traction motor to output corresponding torque according to the command of the energy management module; the voltage sensors are configured to monitor the real-time input and output voltage of the inverter; and the current sensors are configured to monitor the real-time input and output current of the inverter.

The traction motor is equipped with a speed sensor and a temperature sensor. The speed sensor is configured to monitor the speed of the traction motor, and the temperature sensor is configured to monitor the working temperature of the traction motor.

The supercapacitor is one of the main power supplies of the hybrid power supply system. Under the premise of the same output power requirements, the hybrid power supply system can be equipped with an internal electric power pack with low power, thereby reducing the emission of pollution gas and the production cost of the entire hybrid power supply system.

The hybrid power supply system according to the embodiment of the present invention includes one energy management module, one internal electric power pack, one rectifier, one supercapacitor, one inverter, four traction motors, and a set of MVB network.

The control strategy for the hybrid power supply system of the present invention is a direct torque plus power limit control strategy. When the train is running, the energy management module sends a level signal of a master controller of the train to the inverter, and the inverter, according to the received level signal of the master controller and the dynamic performance of the hybrid power supply system, sets an envelope curve of train speed vs. traction force and an envelope curve of train speed vs. regenerative braking force to control the traction motor to output the corresponding torque; at the same time, the inverter, according to the voltage and current values acquired at the input end, calculates and sends a current actual demanded power to the energy management module, the energy management module, according to the current available power of the supercapacitor, calculates a required output power and sends a command of the required output power to the rectifier, and the rectifier, according to the command of the energy management module, controls the internal electric power pack to output corresponding power.

When the train is in a traction mode, the internal electric power pack and the supercapacitor provide power in parallel to the traction motor and the on-board load.

When the train is braked, the internal electric power pack runs at idle speed, the rectifier is standby, and the supercapacitor quickly recovers the regenerative braking energy of the traction motor.

When the train is in an inert mode or an static mode, the internal electric power pack runs at idle speed to maintain the current running speed of the train while charging the supercapacitor.

When the internal electric power pack fails and is isolated, the supercapacitor supplies power to the train load to maintain the power supply for a period of time.

When the supercapacitor fails and is isolated, the internal electric power pack supplies power to the train load to maintain the low-speed (for example, less than 50 kilometers per hour) operation of the train.

In the circuit structure of the hybrid power supply system of the present invention, the power connection relationship is as follows: the three-phase output ends U, V, W of the internal electric power pack are connected to the corresponding three-phase input ends U, V, W of the rectifier; the positive and negative poles of the rectifier for outputting direct current are connected to the corresponding input positive and negative poles of the supercapacitor; the positive and negative output poles of the supercapacitor are connected to the corresponding positive and negative input poles of the traction inverter and the auxiliary inverter; the three-phase output ends U, V, W of the traction inverter are connected to the corresponding three-phase input ends U, V, W of the traction motor; the three-phase output ends and DC output end of the auxiliary inverter are connected to corresponding three-phase buses and DC bus of the train.

In the circuit structure of the hybrid power supply system of the present invention, the control connection relationship is as follows: the energy management module includes a plurality of control modules which communicate with respective components by MVBs, the WVBs are divided into two channels A and B that are mutually redundant; one wire of X1 of the internal electric power pack is connected to XI of the energy management module, the other wire of X1 of the internal electric power pack is connected to XI of the rectifier, one wire of X2 of the internal electric power pack is connected to X2 of the energy management module, and the other wire of X2 of the internal electric power pack is connected to X2 of the rectifier; the other wire of X1 of the rectifier is connected to X1 of the supercapacitor, and the other wire of X2 of the rectifier is connected to X2 of the supercapacitor; the other wire of X1 of the supercapacitor is connected to X1 of the inverter, and the other wire of X2 of the supercapacitor is connected to X2 of the inverter.

When the train is in a traction mode, the energy management module judges whether the terminal voltage of the supercapacitor is greater than a first set voltage value of the supercapacitor; if the terminal voltage of the supercapacitor is greater than the first set voltage value, the energy management module controls the rectifier to be turned on, and the internal electric power pack and the supercapacitor supply power to the inverter together; if the terminal voltage of the supercapacitor is smaller than the first set voltage value, the energy management module controls the rectifier to be turned on, and the internal electric power pack charges the supercapacitor until the terminal voltage of the supercapacitor reaches the first set voltage value.

When the train is braked, the energy management module controls the internal electric power pack to run at idle speed and controls the rectifier to stand by, and at the same time, judges whether the current terminal voltage sent by the supercapacitor is greater than a second set voltage value of the supercapacitor; when the terminal voltage of the supercapacitor is greater than the second set voltage value, the energy management module controls the supercapacitor to be isolated, and the regenerative braking electricity is consumed by on-board devices and braking resistors; when the terminal voltage of the supercapacitor is smaller than the second set voltage value, the energy management module controls the supercapacitor to operate, and the regenerative braking electricity is absorbed by the supercapacitor and the on-board devices.

When the train is in an inert mode or an static mode, the energy management module controls the internal electric power pack to run at idle speed and controls the rectifier to operate, and at the same time, judges whether the current terminal voltage sent by the supercapacitor is greater than a third set voltage value of the supercapacitor; when the terminal voltage of the supercapacitor is greater than the third set voltage value, the energy management module controls the supercapacitor to be isolated; when the terminal voltage of the supercapacitor is smaller than the third set voltage value, the internal electric power pack charges the supercapacitor.

When the internal electric power pack fails, the energy management module controls the internal electric power pack and the rectifier to stop, and at the same time, judges whether the current terminal voltage sent by the supercapacitor is greater than a fourth set voltage value of the supercapacitor; when the terminal voltage of the supercapacitor is greater than the fourth set voltage value, the supercapacitor supplies power to the train load to maintain the power supply for a period of time; when the terminal voltage of the supercapacitor is smaller than the fourth set voltage value, the supercapacitor is first charged by an external power supply, and then the supercapacitor supplies power to the train load.

When the supercapacitor fails, the energy management module controls the supercapacitor to be isolated, and controls the internal electric power pack to supply power to train traction loads and auxiliary loads.

The configuration rules of the hybrid power supply system of the present invention are: low-power internal electric power pack plus high-power supercapacitor (at present, the international internal electric power pack has a minimum power of about 390 kW and a maximum power of about 700 kW, and the present invention employs a power pack having a minimum power of 390 kW and a 450 kW supercapacitor). It is well known that the price and weight of a set of internal electric power pack is about 1.5 times those of a supercapacitor of the same power, so the hybrid power supply system of the present invention has the characteristics of lightweight and low cost.

## Claims

1. A hybrid power supply system of a diesel multiple unit for a train, wherein the hybrid power supply system comprises:
an energy management module, configured to receive a current voltage, a current, actual available power, and current output power sent by a first, second, third and fourth control module of each of an internal electric power pack, a rectifier, a supercapacitor, and an inverter for energy management respectively;
the first control module of the internal electric power pack, configured to send its own working parameters to the energy management module, and at the same time transmit energy and its own capability parameters to the rectifier;
the second control module of the rectifier, configured to send its own working parameters to the energy management module, and at the same time transmit energy and its own capability parameters to the inverter;
the third control module of the supercapacitor, configured to send its own working parameters to the energy management module, and at the same time transmit energy and its own capability parameters to the inverter; and
the fourth control module of the inverter, configured to send its own working parameters to the energy management module, and at the same time supply the output electricity of the internal electric power pack and the supercapacitor to a traction motor to monitor the working state of the traction motor, wherein:
when the train is running,
the energy management module is configured to send a level signal of a master controller of the train to the inverter,
the inverter is configured, according to the received level signal of the master controller and the dynamic performance of the hybrid power supply system, to set an envelope curve of train speed vs. traction force and an envelope curve of train speed vs. regenerative braking force to control the traction motor to output a corresponding torque and, at the same time, to calculate and send, according to the voltage and current values acquired at the input end, a current actual demanded power value to the energy management module,
the energy management module is configured, according to the current available power of the supercapacitor, to calculate a required output power and sends a command corresponding to the required output power to the rectifier, and
the rectifier is configured, according to the command of the energy management module, to control the internal electric power pack to output corresponding power;
when the train is in a traction mode,
the energy management module is configured to:
determine whether a terminal voltage of the supercapacitor is greater than a first set voltage value of the supercapacitor,
if the terminal voltage of the supercapacitor is greater than the first set voltage value, control the rectifier to turn on, the internal electric power pack and the supercapacitor supplying power to the inverter together, and
if the terminal voltage of the supercapacitor is smaller than the first set voltage value, control the rectifier to turn on, the internal electric power pack charging the supercapacitor until the terminal voltage of the supercapacitor reaches the first set voltage value;
when the train brakes,
the energy management module is configured to:
control the internal electric power pack to run at an idle speed and control the rectifier to stand by, and at the same time, determine whether the current terminal voltage sent by the supercapacitor is greater than a second set voltage value of the supercapacitor,
if the terminal voltage of the supercapacitor is greater than the second set voltage value, control the supercapacitor to be isolated, regenerative braking electricity consumed by on-board devices and braking resistors, and
if the terminal voltage of the supercapacitor is smaller than the second set voltage value, control the supercapacitor to operate, the regenerative braking electricity absorbed by the supercapacitor and the on-board devices;
when the train is in an inert mode or a static mode,
the energy management module is configured to:
control the internal electric power pack to run at the idle speed and control the rectifier to operate, and at the same time, determine whether the current terminal voltage sent by the supercapacitor is greater than a third set voltage value of the supercapacitor,
if the terminal voltage of the supercapacitor is greater than the third set voltage value, control the supercapacitor to be isolated, and
if the terminal voltage of the supercapacitor is smaller than the third set voltage value, control the internal electric power pack to charge the supercapacitor;
when the internal electric power pack fails,
the energy management module is configured to control the internal electric power pack and the rectifier to stop, and at the same time, determine whether the current terminal voltage sent by the supercapacitor is greater than a fourth set voltage value of the supercapacitor,
if the terminal voltage of the supercapacitor is greater than the fourth set voltage value, the supercapacitor is configured to supply power to the train load to maintain the power supply for a period of time, and
if the terminal voltage of the supercapacitor is smaller than the fourth set voltage value, the supercapacitor is configured to be charged by an external power supply, and then to supply power to the train load; and
when the supercapacitor fails,
the energy management module is configured to control the supercapacitor to be isolated, and control the internal electric power pack to supply power to train traction loads and auxiliary loads.

2. The hybrid power supply system of the diesel multiple unit according to claim 1, wherein:
the internal electric power pack comprises a first control module;
the first control module is connected to a first current sensor and a first voltage sensor;
the first current sensor and the first voltage sensor are both connected to a generator;
the generator is connected to a diesel engine;
the first control module is configured to monitor the state of the generator and control the internal electric power pack to output corresponding power according to the command of the rectifier;
the first voltage sensor is configured to monitor a real-time output voltage of the generator; and
the first current sensor is configured to monitor a real-time output current of the generator.

3. The hybrid power supply system of the diesel multiple unit according to claim 2, wherein:
the rectifier comprises a second control module;
the second control module is connected to a second voltage sensor and a second current sensor;
the second voltage sensor and the second current sensor are both connected to a DC/DC converter;
the DC/DC converter is connected to an AC/DC converter;
the AC/DC converter is connected to the generator through a first contactor;
the second control module is configured to monitor the state of the DC/DC converter and control the rectifier to output corresponding power according to the command of the energy management module;
the first contactor is configured to contact or isolate the rectifier;
the second voltage sensor is configured to monitor the real-time output voltage of the rectifier; and
the second current sensor is configured to monitor the real-time output current of the rectifier.

4. The hybrid power supply system of the diesel multiple unit according to claim 3, wherein:
the supercapacitor comprises a third control module connected to a third voltage sensor and a third current sensor;
the input ends of the third current sensor and the third voltage sensor are connected to a fuse;
the fuse is connected to the supercapacitor and to the DC/DC converter through a second contactor;
the third control module is configured to monitor the state of the supercapacitor;
the third voltage sensor is configured to monitor the real-time output voltage of the supercapacitor;
the third current sensor is configured to monitor the real-time output current of the supercapacitor;
the fuse is configured to perform over-current protection; and
the second contactor is configured to contact or isolate the supercapacitor.

5. The hybrid power supply system of the diesel multiple unit according to claim 1, wherein when the train is in a traction mode, the internal electric power pack and the supercapacitor are configured to provide power in parallel to the traction motor and the on-board load.

6. The hybrid power supply system of the diesel multiple unit according to claim 1, wherein when the train brakes, the internal electric power pack is configured to run at the idle speed, the rectifier is configured to standby, and the supercapacitor quickly is configured to recover the regenerative braking electricity of the traction motor.

7. The hybrid power supply system of the diesel multiple unit according to claim 1, wherein when the train is in the inert mode or the static mode, the internal electric power pack is configured to run at the idle speed to maintain the current running speed of the train while charging the supercapacitor.

8. The hybrid power supply system of the diesel multiple unit according to claim 1, wherein:
when the internal electric power pack fails and is isolated, the supercapacitor is configured to supply power to the train load to maintain the power supply for a period of time; and
when the supercapacitor fails and is isolated, the internal electric power pack is configured to supply power to the train load to maintain low-speed operation of the train.

9. The hybrid power supply system of the diesel multiple unit according to claim 1, wherein the power of the internal electric power pack is 360 to 390 kW, and the power of the supercapacitor is 300 to 450 kW.

## Patentansprüche

1. Hybrides Stromversorgungssystem eines Dieseltriebzugs für einen Zug, wobei das hybride Stromversorgungssystem Folgendes umfasst:
ein Energiemanagementmodul, das so konfiguriert ist, dass es eine derzeitige Spannung, eine derzeit tatsächlich verfügbare Leistung und eine derzeitige Ausgangsleistung aus einem ersten, einem zweiten, einem dritten und einem vierten Steuermodul eines internen Elektroaggregats, eines Gleichrichters, eines Superkondensators beziehungsweise eines Wechselrichters für das Energiemanagement erhält,
das erste Steuermodul des internen Elektroaggregats, das so konfiguriert ist, dass es seine eigenen Arbeitsparameter zum Energiemanagementmodul sendet und gleichzeitig Energie und seine eigenen Leistungsparameter zum Gleichrichter leitet,
das zweite Steuermodul des Gleichrichters, das so konfiguriert ist, dass es seine eigenen Arbeitsparameter zum Energiemanagementmodul sendet und gleichzeitig Energie und seine eigenen Leistungsparameter zum Wechselrichter leitet,
das dritte Steuermodul des Superkondensators, das so konfiguriert ist, dass es seine eigenen Arbeitsparameter zum Energiemanagementmodul sendet und gleichzeitig Energie und seine eigenen Leistungsparameter zum Wechselrichter leitet, und
das vierte Steuermodul des Wechselrichters, das so konfiguriert ist, dass es seine eigenen Arbeitsparameter zum Energiemanagementmodul sendet und gleichzeitig den Ausgangsstrom des internen Elektroaggregats und des Superkondensators einem Traktionsmotor zuführt und
so den Arbeitszustand des Traktionsmotors überwacht, wobei,
wenn der Zug fährt:
das Energiemanagementmodul so konfiguriert ist, dass es ein Pegelsignal eines Fahrschalters des Zuges zum Wechselrichter sendet,
der Wechselrichter so konfiguriert ist, dass er dem erhaltenen Pegelsignal des Fahrschalters und der dynamischen Leistung des hybriden Stromversorgungssystems entsprechend eine Hüllkurve von Zuggeschwindigkeit über Zugkraft und eine Hüllkurve von Zuggeschwindigkeit über Nutzbremskraft festlegt und so den Traktionsmotor zum Abgeben eines entsprechenden Drehmoments veranlasst und gleichzeitig den am Eingangsende gewonnenen Spannungs- und Stromwerten entsprechend einen Wert für die derzeit tatsächlich benötigte Leistung berechnet und zum Energiemanagementmodul sendet,
das Energiemanagementmodul so konfiguriert ist, dass es der derzeit verfügbaren Leistung des Superkondensators entsprechend eine benötigte Ausgangsleistung berechnet und einen der benötigten Ausgangsleistung entsprechenden Befehl zum Gleichrichter sendet, und
der Gleichrichter so konfiguriert ist, dass er dem Befehl des Energiemanagementmoduls entsprechend das interne Elektroaggregat zum Abgeben von entsprechender Leistung veranlasst,
das Energiemanagementmodul so konfiguriert ist, dass es,
wenn sich der Zug in einem Zugbetrieb befindet:
bestimmt, ob eine Anschlussspannung des Superkondensators über einem ersten festgelegten Spannungswert für den Superkondensator liegt,
ein Einschalten des Gleichrichters veranlasst, wenn die Anschlussspannung des Superkondensators über dem ersten festgelegten Spannungswert liegt, wobei das interne Elektroaggregat und der Superkondensator den Wechselrichter gemeinsam mit Strom versorgen, und
ein Einschalten des Gleichrichters veranlasst, wenn die Anschlussspannung des Superkondensators unter dem ersten festgelegten Spannungswert liegt, wobei das interne Elektroaggregat den Superkondensator lädt, bis dessen Anschlussspannung den ersten festgelegten Spannungswert erreicht,
das Energiemanagementmodul so konfiguriert ist, dass es,
wenn der Zug bremst:
veranlasst, dass sich das interne Elektroaggregat im Leerlauf und der Gleichrichter in Betriebsbereitschaft befindet, und gleichzeitig bestimmt, ob die von dem Superkondensator gesendete derzeitige Anschlussspannung über einem zweiten festgelegten Spannungswert für den Superkondensator liegt,
ein Trennen des Superkondensators veranlasst, wenn dessen Anschlussspannung über dem zweiten festgelegten Spannungswert liegt, wobei bei der Nutzbremsung erzeugter Strom von Bordvorrichtungen und Bremswiderständen verbraucht wird, und
einen Betrieb des Superkondensators veranlasst, wenn dessen Anschlussspannung unter dem zweiten festgelegten Spannungswert liegt, wobei der bei der Nutzbremsung erzeugte Strom von dem Superkondensator und den Bordvorrichtungen aufgenommen wird,
das Energiemanagementmodul so konfiguriert ist, dass es,
wenn sich der Zug in einem inaktiven oder ruhenden Zustand befindet:
veranlasst, dass sich das interne Elektroaggregat im Leerlauf und der Gleichrichter in Betrieb befindet, und gleichzeitig bestimmt, ob die von dem Superkondensator gesendete derzeitige Anschlussspannung über einem dritten festgelegten Spannungswert für den Superkondensator liegt,
ein Trennen des Superkondensators veranlasst, wenn dessen Anschlussspannung über dem dritten festgelegten Spannungswert liegt, und
das interne Elektroaggregat zum Laden des Superkondensators veranlasst,wenn die Anschlussspannung des Superkondensators unter dem dritten festgelegten Spannungswert liegt,
wenn das interne Elektroaggregat ausfällt:
das Energiemanagementmodul so konfiguriert ist, dass es ein Stoppen des internen Elektroaggregats und des Gleichrichters veranlasst und gleichzeitig bestimmt, ob die von dem Superkondensator gesendete derzeitige Anschlussspannung über einem vierten festgelegten Spannungswert für den Superkondensator liegt,
der Superkondensator so konfiguriert ist, dass er, wenn seine Anschlussspannung über dem vierten festgelegten Spannungswert liegt, die Zuglast mit Strom versorgt und so die Stromversorgung für einen Zeitraum aufrechterhält, und
der Superkondensator so konfiguriert ist, dass er, wenn seine Anschlussspannung unter dem vierten festgelegten Spannungswert liegt, über eine externe Stromversorgung geladen wird und dann die Zuglast mit Strom versorgt, und
wenn der Superkondensator ausfällt:
das Energiemanagementmodul so konfiguriert ist, dass es ein Trennen des Superkondensators und ein Versorgen von Zuglasten und sonstigen Lasten mit Strom durch das interne Elektroaggregat veranlasst.

2. Hybrides Stromversorgungssystem des Dieseltriebzugs nach Anspruch 1, wobei:
das interne Elektroaggregat ein erstes Steuermodul umfasst,
das erste Steuermodul mit einem ersten Stromsensor und einem ersten Spannungssensor verbunden ist,
der erste Stromsensor und der erste Spannungssensor beide mit einem Generator verbunden sind,
der Generator mit einem Dieselmotor verbunden ist,
das erste Steuermodul so konfiguriert ist, dass es den Zustand des Generators überwacht und dem Befehl des Gleichrichters entsprechend das interne Elektroaggregat zum Abgeben von entsprechender Leistung veranlasst,
der erste Spannungssensor so konfiguriert ist, dass er eine Echtzeit-Ausgangsspannung des Generators überwacht, und
der erste Stromsensor so konfiguriert ist, dass er einen Echtzeit-Ausgangsstrom des Generators überwacht.

3. Hybrides Stromversorgungssystem des Dieseltriebzugs nach Anspruch 2, wobei:
der Gleichrichter ein zweites Steuermodul umfasst,
das zweite Steuermodul mit einem zweiten Spannungssensor und einem zweiten Stromsensor verbunden ist,
der zweite Spannungssensor und der zweite Stromsensor beide mit einem Gleichspannungswandler verbunden sind,
der Gleichspannungswandler mit einem AC/DC-Wandler verbunden ist,
der AC/DC-Wandler über ein erstes Schaltschütz mit dem Generator verbunden ist,
das zweite Steuermodul so konfiguriert ist, dass es den Zustand des Gleichspannungswandlers überwacht und dem Befehl des Energiemanagementmoduls entsprechend den Gleichrichter zum Abgeben von entsprechender Leistung veranlasst,
das erste Schaltschütz so konfiguriert ist, dass es den Gleichrichter verbindet oder trennt,
der zweite Spannungssensor so konfiguriert ist, dass er die Echtzeit-Ausgangsspannung des Gleichrichters überwacht, und
der zweite Stromsensor so konfiguriert ist, dass er den Echtzeit-Ausgangsstrom des Gleichrichters überwacht.

4. Hybrides Stromversorgungssystem des Dieseltriebzugs nach Anspruch 3, wobei:
der Superkondensator ein drittes Steuermodul umfasst, das mit einem dritten Spannungssensor und einem dritten Stromsensor verbunden ist,
die Eingangsenden des dritten Stromsensors und des dritten Spannungssensors mit einer Sicherung verbunden sind,
die Sicherung über ein zweites Schaltschütz mit dem Superkondensator und dem Gleichspannungswandler verbunden ist,
das dritte Steuermodul so konfiguriert ist, dass es den Zustand des Superkondensators überwacht,
der dritte Spannungssensor so konfiguriert ist, dass er die Echtzeit-Ausgangsspannung des Superkondensators überwacht,
der dritte Stromsensor so konfiguriert ist, dass er den Echtzeit-Ausgangsstrom des Superkondensators überwacht,
die Sicherung so konfiguriert ist, dass sie für Überstromschutz sorgt, und
das zweite Schaltschütz so konfiguriert ist, dass es den Superkondensator verbindet oder trennt.

5. Hybrides Stromversorgungssystem des Dieseltriebzugs nach Anspruch 1, wobei das interne Elektroaggregat und der Superkondensator so konfiguriert sind, dass sie, wenn sich der Zug in einem Zugbetrieb befindet, den Traktionsmotor und die Bordlast gleichzeitig mit Strom versorgen.

6. Hybrides Stromversorgungssystem des Dieseltriebzugs nach Anspruch 1, wobei das interne Elektroaggregat so konfiguriert ist, dass es sich im Leerlauf befindet, der Gleichrichter so konfiguriert ist, dass er sich im Betriebsbereitschaftsmodus befindet, und der Superkondensator schnell so konfiguriert wird, dass er den vom Traktionsmotor bei der Nutzbremsung erzeugten Strom zurückgewinnt, wenn der Zug bremst.

7. Hybrides Stromversorgungssystem des Dieseltriebzugs nach Anspruch 1, wobei das interne Elektroaggregat so konfiguriert ist, dass es sich, wenn sich der Zug im inaktiven oder ruhenden Zustand befindet, im Leerlauf befindet und so die derzeitige Fahrgeschwindigkeit des Zuges aufrechterhält, während der Superkondensator geladen wird.

8. Hybrides Stromversorgungssystem des Dieseltriebzugs nach Anspruch 1, wobei:
der Superkondensator so konfiguriert ist, dass er, wenn das interne Elektroaggregat ausfällt und getrennt ist, die Zuglast mit Strom versorgt und so die Stromversorgung für einen Zeitraum aufrechterhält, und
das interne Elektroaggregat so konfiguriert ist, dass es, wenn der Superkondensator ausfällt und getrennt ist, die Zuglast mit Strom versorgt und so einen Betrieb des Zuges bei geringer Geschwindigkeit aufrechterhält.

9. Hybrides Stromversorgungssystem des Dieseltriebzugs nach Anspruch 1, wobei die Leistung des internen Elektroaggregats 360 bis 390 kW und die des Superkondensators 300 bis 450 kW beträgt.

## Revendications

1. Système d'alimentation hybride d'une rame diesel à unités multiples pour un train, le système d'alimentation hybride comprenant :
un module de gestion d'énergie, configuré pour recevoir une tension courante, un courant, une puissance disponible réelle et une puissance de sortie courante envoyée par un premier, un deuxième, un troisième et un quatrième module de commande de chacun d'un bloc de puissance électrique interne, d'un redresseur, d'un supercondensateur et d'un inverseur de gestion d'énergie, respectivement ;
le premier module de commande du bloc de puissance électrique interne, configuré pour envoyer ses propres paramètres de travail au module de gestion d'énergie et, dans le même temps, transmettre de l'énergie et ses propres paramètres de capacité au redresseur ;
le deuxième module de commande du redresseur, configuré pour envoyer ses propres paramètres de travail au module de gestion d'énergie et, dans le même temps, transmettre de l'énergie et ses propres paramètres de capacité à l'inverseur ;
le troisième module de commande du supercondensateur, configuré pour envoyer ses propres paramètres de travail au module de gestion d'énergie et, dans le même temps, transmettre de l'énergie et ses propres paramètres de capacité à l'inverseur ; et
le quatrième module de commande de l'inverseur, configuré pour envoyer ses propres paramètres de travail au module de gestion d'énergie et, dans le même temps, alimenter un moteur de traction avec l'électricité de sortie du bloc de puissance électrique interne et du supercondensateur pour surveiller l'état de fonctionnement du moteur de traction,
lorsque le train est en marche,
le module de gestion d'énergie étant configuré pour envoyer à l'inverseur un signal de niveau d'un dispositif de commande maître du train,
l'inverseur étant configuré, selon le signal de niveau reçu du dispositif de commande maître et les performances dynamiques du système d'alimentation hybride, pour définir une courbe enveloppe de la vitesse du train en fonction de la force de traction et une courbe enveloppe de la vitesse du train en fonction de la force de freinage par récupération pour commander le moteur de traction pour délivrer un couple correspondant et, dans le même temps, pour calculer et envoyer, selon les valeurs de tension et de courant acquises au niveau de l'extrémité d'entrée, une valeur de puissance demandée réelle courante au module de gestion d'énergie,
le module de gestion d'énergie étant configuré, selon la puissance disponible courante du supercondensateur, pour calculer une puissance de sortie requise et envoyer au redresseur une commande correspondant à la puissance de sortie requise, et
le redresseur étant configuré, selon la commande du module de gestion d'énergie, pour commander le bloc de puissance électrique interne pour délivrer une puissance correspondante ;
lorsque le train est dans un mode de traction,
le module de gestion d'énergie étant configuré pour :
déterminer si une tension aux bornes du supercondensateur est supérieure à une première valeur de tension de consigne du supercondensateur,
si la tension aux bornes du supercondensateur est supérieure à la première valeur de tension de consigne, commander le redresseur pour qu'il se mette sous tension, le bloc de puissance électrique interne et le supercondensateur alimentant conjointement l'inverseur, et
si la tension aux bornes du supercondensateur est inférieure à la première valeur de tension de consigne, commander le redresseur pour qu'il se mette sous tension, le bloc de puissance électrique interne rechargeant le supercondensateur jusqu'à ce que la tension aux bornes du supercondensateur
atteigne la première valeur de tension de consigne ;
lorsque le train freine,
le module de gestion d'énergie étant configuré pour :
commander le bloc de puissance électrique interne pour qu'il fonctionne au ralenti et commander le redresseur pour qu'il se mette en veille et, dans le même temps, déterminer si la tension aux bornes courante envoyée par le supercondensateur est supérieure à une deuxième valeur de tension de consigne du supercondensateur,
si la tension aux bornes du supercondensateur est supérieure à la deuxième valeur de tension de consigne, commander le supercondensateur pour qu'il soit isolé, l'électricité de freinage par récupération consommée par les dispositifs embarqués et les résistances de freinage, et
si la tension aux bornes du supercondensateur est inférieure à la deuxième valeur de tension de consigne, commander le supercondensateur pour qu'il fonctionne, l'électricité de freinage par récupération absorbée par le supercondensateur et les dispositifs embarqués ;
lorsque le train est dans un mode inerte ou un mode statique,
le module de gestion d'énergie étant configuré pour :
commander le bloc de puissance électrique interne pour qu'il fonctionne au ralenti et commander le redresseur pour qu'il fonctionne et, dans le même temps, déterminer si la tension aux bornes courante envoyée par le supercondensateur est supérieure à une troisième valeur de tension de consigne du supercondensateur,
si la tension aux bornes du supercondensateur est supérieure à la troisième valeur de tension de consigne, commander le supercondensateur pour qu'il soit isolé, et
si la tension aux bornes du supercondensateur est inférieure à la troisième valeur de tension de consigne, commander le bloc de puissance
électrique interne pour recharger le supercondensateur ;
lorsque le bloc de puissance électrique interne tombe en panne,
le module de gestion d'énergie étant configuré pour commander le bloc de puissance électrique interne et le redresseur pour qu'ils s'arrêtent et, dans le même temps, déterminer si la tension aux bornes courante envoyée par le supercondensateur est supérieure à une quatrième valeur de tension de consigne du supercondensateur,
si la tension aux bornes du supercondensateur est supérieure à la quatrième valeur de tension de consigne, le supercondensateur étant configuré pour alimenter la charge du train pour maintenir l'alimentation pendant une période de temps, et
si la tension aux bornes du supercondensateur est inférieure à la quatrième valeur de tension de consigne, le supercondensateur étant configuré pour être rechargé par une alimentation externe, puis pour alimenter la charge du train ; et lorsque le supercondensateur tombe en panne,
le module de gestion d'énergie étant configuré pour commander le supercondensateur pour qu'il soit isolé et commander le bloc de puissance électrique interne pour qu'il alimente les charges de traction et les charges auxiliaires du train.

2. Système d'alimentation hybride de la rame diesel à unités multiples selon la revendication 1, dans lequel :
le bloc de puissance électrique interne comprend un premier module de commande ;
le premier module de commande est connecté à un premier capteur de courant et à un premier capteur de tension ;
le premier capteur de courant et le premier capteur de tension sont l'un et l'autre connectés à un générateur ;
le générateur est connecté à un moteur diesel ;
le premier module de commande est configuré pour surveiller l'état du générateur et commander le bloc de puissance électrique interne pour qu'il délivre une puissance correspondante selon la commande du redresseur ;
le premier capteur de tension est configuré pour surveiller une tension de sortie en temps réel du générateur ; et
le premier capteur de courant est configuré pour surveiller un courant de sortie en temps réel du générateur.

3. Système d'alimentation hybride de la rame diesel à unités multiples selon la revendication 2, dans lequel :
le redresseur comprend un deuxième module de commande ;
le deuxième module de commande est connecté à un deuxième capteur de tension et à un deuxième capteur de courant ;
le deuxième capteur de tension et le deuxième capteur de courant sont l'un et l'autre connectés à un convertisseur CC-CC ;
le convertisseur CC-CC est connecté à un convertisseur CA-CC ;
le convertisseur CA-CC est connecté au générateur par l'intermédiaire d'un premier contacteur ;
le deuxième module de commande est configuré pour surveiller l'état du convertisseur CC-CC et commander le redresseur pour qu'il délivre une puissance correspondante selon la commande du module de gestion d'énergie ;
le premier contacteur est configuré pour contacter ou isoler le redresseur ;
le deuxième capteur de tension est configuré pour surveiller la tension de sortie en temps réel du redresseur ; et
le deuxième capteur de courant est configuré pour surveiller le courant de sortie en temps réel du redresseur.

4. Système d'alimentation hybride de la rame diesel à unités multiples selon la revendication 3, dans lequel :
le supercondensateur comprend un troisième module de commande connecté à un troisième capteur de tension et à un troisième capteur de courant ;
les extrémités d'entrée du troisième capteur de courant et du troisième capteur de tension sont connectées à un fusible ;
le fusible est connecté au supercondensateur et au convertisseur CC-CC par l'intermédiaire d'un second contacteur ;
le troisième module de commande est configuré pour surveiller l'état du supercondensateur ;
le troisième capteur de tension est configuré pour surveiller la tension de sortie en temps réel du supercondensateur ;
le troisième capteur de courant est configuré pour surveiller le courant de sortie en temps réel du supercondensateur ;
le fusible est configuré pour réaliser une protection contre les surintensités ; et
le second contacteur est configuré pour contacter ou isoler le supercondensateur.

5. Système d'alimentation hybride de la rame diesel à unités multiples selon la revendication 1, dans lequel, lorsque le train est dans un mode de traction, le bloc de puissance électrique interne et le supercondensateur sont configurés pour fournir une puissance en parallèle au moteur de traction et à la charge embarquée.

6. Système d'alimentation hybride de la rame diesel à unités multiples selon la revendication 1, dans lequel, lorsque le train freine, le bloc de puissance électrique interne est configuré pour fonctionner au ralenti, le redresseur est configuré pour se mettre en veille et le supercondensateur est configuré rapidement pour récupérer l'électricité de freinage par récupération du moteur de traction.

7. Système d'alimentation hybride de la rame diesel à unités multiples selon la revendication 1, dans lequel, lorsque le train est dans le mode inerte ou le mode statique, le bloc de puissance électrique interne est configuré pour fonctionner au ralenti pour maintenir la vitesse de fonctionnement courante du train pendant le rechargement du supercondensateur.

8. Système d'alimentation hybride de la rame diesel à unités multiples selon la revendication 1, dans lequel :
lorsque le bloc de puissance électrique interne tombe en panne et est isolé, le supercondensateur est configuré pour alimenter la charge du train pour maintenir l'alimentation pendant une période de temps ; et
lorsque le supercondensateur tombe en panne et est isolé, le bloc de puissance électrique interne est configuré pour alimenter la charge du train pour maintenir un fonctionnement à basse vitesse du train.

9. Système d'alimentation hybride de la rame diesel à unités multiples selon la revendication 1, dans lequel la puissance du bloc de puissance électrique interne est de 360 à 390 kW et la puissance du supercondensateur est de 300 à 450 kW.
